(19)

Europäisches Patentamt

European Patent Office

Office européen des brevets

(11) **EP 4 086 872 A1**

(12) **EUROPEAN PATENT APPLICATION**

(43) Date of publication:
**09.11.2022 Bulletin 2022/45**

(21) Application number: **21205229.4**

(22) Date of filing: **28.10.2021**

(51) International Patent Classification (IPC):
**G08G 1/01** *(2006.01)*     **G08G 1/14** *(2006.01)*

(52) Cooperative Patent Classification (CPC):
**G08G 1/0112; G08G 1/0129; G08G 1/0133;
G08G 1/143; G08G 1/144**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.07.2021   CN 202110837536**

(71) Applicant: **Guangzhou Xiaopeng Autopilot Co.,
Ltd.
Guangzhou, Guangdong 510640 (CN)**

(72) Inventors:
• **SU, Jingren
  Guangzhou (CN)**
• **XU, Yang
  Guangzhou (CN)**
• **WEN, Yongbing
  Guangzhou (CN)**

(74) Representative: **Rowlands, Stuart Michael et al
Maucher Jenkins
Seventh Floor Offices
Artillery House
11-19 Artillery Row
London SW1P 1RT (GB)**

(54) **PARKING ROUTE DETERMINING METHOD AND APPARATUS, VEHICLE AND STORAGE MEDIUM**

(57)     A parking route determining method, a parking route determining apparatus, a vehicle and a storage medium are provided. The method is applied to a vehicle terminal mounted in a vehicle and includes: determining target parking space information of a target parking space based on location information of obstacles in surroundings of the vehicle; determining a target area based on the target parking space information; sampling the target area, and generating a target matrix corresponding to the target area based on a plurality of sampling points obtained through the sampling, each element in the target matrix corresponding to a respective one of the sampling points, and each element being a vector; and determining a parking route for the vehicle based on current pose information of the vehicle, the target matrix and the target parking space information.

determining target parking space information of a target parking space based on location information of obstacles in the surroundings of the vehicle — 201

determining a target area based on the target parking space information, the target area being an area on a travel route of the vehicle where a parking operation is performed for parking the vehicle onto the target parking space — 202

sampling the target area, and generating a target matrix corresponding to the target area based on a plurality of sampling points obtained through the sampling, each element in the target matrix corresponding to a respective one of the sampling points, and each element being a vector — 203

determining a parking path for the vehicle based on current pose information of the vehicle, the target matrix and the target parking space information — 204

Fig. 2

EP 4 086 872 A1

## Description

### Field of Invention

The present application relates to the technical field of vehicle terminals, and in particular, to a parking route determining method, a parking route determining apparatus, a vehicle, and a storage medium.

### Background

With the rapid development of science and technology, vehicles are used more and more frequently in our daily life. Parking of vehicles is an indispensable part in using vehicles, and it is necessary to ensure vehicle travelling safety during parking. Currently, when parking a vehicle, a user needs to operate manually and repeatedly view images in a rearview mirror and images acquired by a rear camera, so as to ensure that there are no obstacles around the vehicle and that the vehicle can be accurately parked into a parking space.

In the above-mentioned technical solution, the user needs to repeatedly view the images in the rearview mirror and the images acquired by the rear camera, which is cumbersome and causes the problem of low accuracy in determining a parking route.

### Summary of Invention

Embodiments of the present disclosure provide a parking route determining method, a parking route determining apparatus, a vehicle, and a storage medium, which can improve accuracy in determining a parking route.

In one aspect, an embodiment of the present disclosure provides a parking route determining method applied to a vehicle terminal mounted in a vehicle. The method includes:

    determining target parking space information of a target parking space based on location information of obstacles in surroundings of the vehicle;
    determining a target area based on the target parking space information, the target area being an area on a travel route of the vehicle where a parking operation is performed for parking the vehicle into the target parking space;
    sampling the target area, and generating a target matrix corresponding to the target area based on a plurality of sampling points obtained through the sampling, each element in the target matrix corresponding to a respective one of the sampling points, and each element being a vector; and
    determining a parking route for the vehicle based on current pose information of the vehicle, the target matrix, and the target parking space information.

Optionally, sampling the target area, and generating a target matrix corresponding to the target area based on a plurality of sampling points obtained through the sampling includes:

    sampling the target area based on a predetermined sampling structure to obtain a plurality of sampling points;
    determining vector directions of respective ones of the sampling points based on the plurality of sampling points and the target parking space information; and
    generating the target matrix corresponding to the target area based on the sampling points and the vector directions of respective ones of the sampling points.

Optionally, after sampling the target area based on a predetermined sampling structure to obtain a plurality of sampling points, the method further includes:

    screening the plurality of sampling points based on planning parameters to obtain a plurality of target sampling points, where the planning parameters include a ratio of the number of the target sampling points to the total number of the plurality of sampling points, and sampling quality of the plurality of sampling points; and
    generating the target matrix corresponding to the target area based on the sampling points and the vector directions of respective ones of the sampling points includes:
    generating a target matrix corresponding to the target area based on the acquired target sampling points and vector directions respective ones of the target sampling points.

Optionally, after sampling the target area, and generating a target matrix corresponding to the target area based on a plurality of sampling points obtained through the sampling, the method further includes:

    determining an offset distance for each element in the target matrix based on current pose information of the vehicle and location information of the obstacles in the surroundings of the vehicle; and
    adding the offset distance to each element in the target matrix to generate a new target matrix; and
    determining a parking route for the vehicle based on current pose information of the vehicle, the target matrix, and the target parking space information includes:
    determining a parking route for the vehicle based on the current pose information of the vehicle, the new target matrix, and the target parking space information.

Optionally, the method further includes:

    acquiring a change range in the surroundings of the vehicle based on the location information of the obstacles in the surroundings of the vehicle; and

re-executing, when the change range is larger than a first change threshold, the step of determining target parking space information of a target parking space based on location information of obstacles in the surroundings of the vehicle.

Optionally, after determining a parking route for the vehicle based on current pose information of the vehicle, the target matrix, and the target parking space information, the method further includes:

calculating a first cost score corresponding to the parking route and a second cost score corresponding to a historical route respectively by means of a cost function, where the historical route includes a parking route determined last time for parking the vehicle into a target parking space; and

determining the parking route as a target planned route if the first cost score is lower than the second cost score, or determining the historical route as a target planned route if the first cost score is not lower than the second cost score.

Optionally, determining a parking route for the vehicle based on current pose information of the vehicle, the target matrix, and the target parking space information includes:

connecting the current pose information of the vehicle with the target matrix to determine a first parking route;

connecting the target matrix with the target parking space information to determine a second parking route; and

generating the parking route for the vehicle based on the first parking route and the second parking route.

In another aspect, an embodiment of the present disclosure provides a parking route determining apparatus applied to a vehicle terminal mounted in a vehicle. The apparatus includes:

an information determining module, configured to determine target parking space information of a target parking space based on location information of obstacles in surroundings of the vehicle;

an area determining module, configured to determine a target area based on the target parking space information, the target area being an area on a travel route of the vehicle where a parking operation is performed for parking the vehicle into the target parking space;

a matrix generation module, configured to sample the target area, and generate a target matrix corresponding to the target area based on a plurality of sampling points obtained through the sampling, each element in the target matrix corresponding to a respective one of the sampling points, and each element being a vector; and

a route determining module, configured to determine a parking route for the vehicle based on current pose information of the vehicle, the target matrix and the target parking space information.

In further another aspect, an embodiment of the present disclosure provides a vehicle including a vehicle terminal. The vehicle terminal includes a processor and a memory having a computer program stored therein. The computer program, when executed by the processor, causes the processor to implement the parking route determining method according to one of the above aspects and any optional implementation thereof.

In another aspect, an embodiment of the present disclosure provides a computer-readable storage medium having a computer program stored therein. The computer program, when executed by a processor, implements the parking route determining method according to another one of the above aspects and any optional implementation thereof.

The technical solutions provided by embodiments of the present disclosure may bring at least the following beneficial effects.

Target parking space information of a target parking space is determined based on location information of obstacles in the surroundings of a vehicle; a target area is determined based on the target parking space information, the target area being an area on a travel route of the vehicle where a parking operation is performed for parking the vehicle into the target parking space; the target area is sampled, and a target matrix corresponding to the target area is generated based on a plurality of sampling points obtained through the sampling, each element in the target matrix corresponding to a respective one of the sampling points, and each element is a vector; and a parking route for the vehicle is determined based on current pose information of the vehicle, the target matrix, and the target parking space information. According to the present disclosure, a target area is determined based on target parking space information; the target area is sampled to generate a target matrix; and then a parking route is determined for the vehicle based on current pose information of the vehicle, the target matrix, and the target parking space information, by way of which a user does not need to evaluate the parking route based on parking experience, which improves the accuracy in determining a parking route.

**Brief Description of Drawings**

In order to explain the technical solutions in the embodiments of the present invention more clearly, the drawings used in the description of the embodiments will be briefly introduced below. Obviously, the drawings in the following description just illustrate some embodiments of the present invention. For those of ordinary skill in the art, other drawings can be obtained based on these drawings without paying any creative labor.

Fig. 1 is a schematic interface diagram of a vehicle model on a map according to an exemplary embodiment of the present disclosure.
Fig. 2 is a flowchart of a parking route determining method according to an exemplary embodiment of the present disclosure.
Fig. 3 is a flowchart of a parking route determining method according to an exemplary embodiment of the present disclosure.
Fig. 4 is a schematic diagram of a display interface of a vehicle terminal according to an exemplary embodiment of the present disclosure.
Fig. 5 is a schematic diagram of a target area determined on an analog map according to an exemplary embodiment of the present disclosure.
Fig. 6 is a schematic diagram of a target area determined on an analog map according to an exemplary embodiment of the present disclosure.
Fig. 7 is a schematic structural diagram of each sampling point in a target area according to an exemplary embodiment of the present disclosure.
Fig. 8 is a schematic structural diagram of a parking route according to an exemplary embodiment of the present disclosure.
Fig. 9 is a structural block diagram of a parking route determining apparatus according to an exemplary embodiment of the present disclosure.

**Detailed Description**

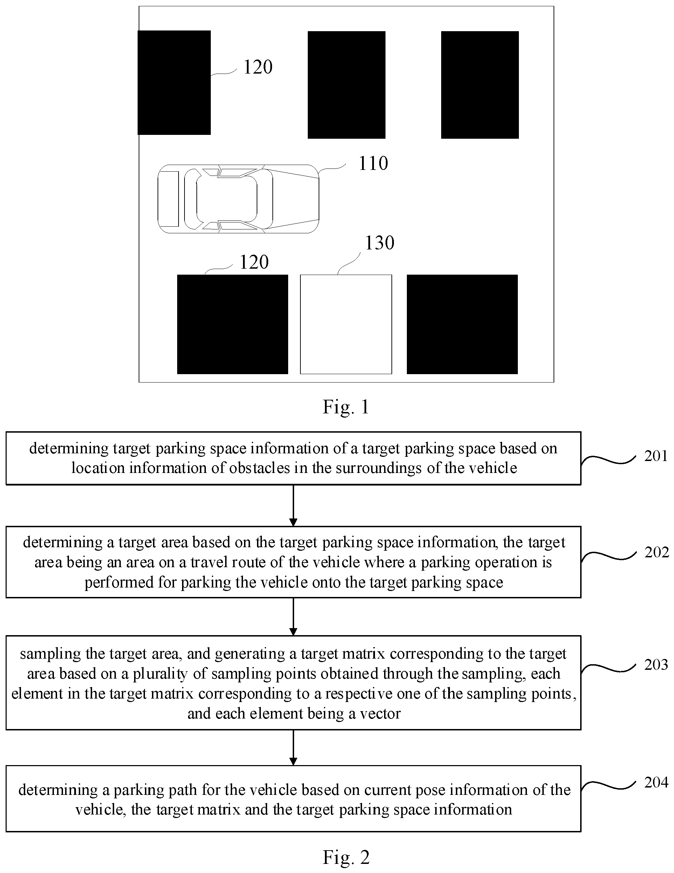

Exemplary embodiments, examples of which are shown in the accompanying drawings, will be described herein in detail. Where the following description relates to the accompanying drawings, unless otherwise indicated, same reference numerals in different accompanying drawings indicate same or similar elements. Implementations described in the following exemplary embodiments do not represent all implementations consistent with the present disclosure, but merely examples of apparatuses and methods that are consistent with some aspects of the present disclosure as described in detail in the appended claims.
As used herein, the term "a plurality of' refers to two or more than two. "And/or", which describes an association relationship between associated objects, indicates that there can be three types of relationships. For example, "A and/or B" can represent three cases: the presence of only A, the presence of A and B, and the presence of only B. The character "/" generally represents an "or" relationship between the associated objects connected thereby.
It should be noted that the terms "first", "second", "third", "fourth" and the like as used in the specification and claims of the present disclosure are intended to distinguish different objects, but not to describe a specific order. The terms "include", "have", and any variations thereof as used in the embodiments of the present disclosure are intended to cover a non-exclusive inclusion. For example, a process, a method, a system, a product or a device that includes a list of steps or units is not limited to including only those explicitly listed steps or units, but may include other steps or units not explicitly listed or inherent to such process, method, product or apparatus.
The solutions provided by the present disclosure may be used in automatic driving scenarios of vehicles in daily life. To facilitate understanding, an application architecture involved in the embodiments of the present disclosure will be briefly introduced below.
In daily life, a variety of vehicles have been used in various fields. With the development of science and technology, vehicles are gradually developing towards automatic driving. In the field of automatic driving, vehicles will encounter various obstacles such as other vehicles, pedestrians, utility poles, tall buildings, and the like. It is particularly important for vehicles to perceive the surroundings. In terms of environmental perception, hardware devices such as cameras and so on can be used currently to capture images and perform data operations to achieve the effect of obstacle detection. For example, common image acquisition devices may include devices such as binocular cameras, monocular cameras, etc.
Referring to Fig. 1, a schematic diagram of a vehicle model on a map according to an exemplary embodiment of the present disclosure is shown. As shown in Fig. 1, the scenario map includes a vehicle model 110, obstacles 120, and an available parking space 130.
When a target vehicle 110 is traveling in a real scenario, a vehicle terminal may acquire images of surroundings and generate a map as shown in Fig. 1. During parking of the vehicle, all passable routes are generated based on a location of the vehicle model and a location of the available parking space 130 in the map. Then the vehicle terminal selects, based on states of the obstacles 120, a passable route that can allow the vehicle to enter the available parking space 130. The selected passable route is the parking route for the vehicle.
In the above process, multiple passable routes are generated based on the location of the vehicle model and the location of the available parking space, in which case the vehicle terminal needs to screen each passable route based on the obstacles, test different passable routes one by one, and plan out different passable routes. This will consume a lot of computing resources, and many of the planning results are to be discarded, resulting in the problem of low efficiency in determining the parking route.
In order to facilitate the planning of a parking route for a vehicle and improve the efficiency in determining the parking route, the present disclosure proposes a solution in which a corresponding target area is determined based on target parking space information. The target area is an area on a travel route of the vehicle where a parking operation is performed for parking the vehicle into a target parking space. Unnecessary data operations are reduced and the efficiency in determining the parking route is improved by using the target area to determine the parking route.

Referring to Fig. 2, a flowchart of a parking route determining method according to an exemplary embodiment of the present disclosure is shown. The parking route determining method may be applied to the vehicle terminal in the vehicle in the scenario architecture shown in Fig. 1, and the method may be executed by the vehicle terminal. As shown in Fig. 2, the parking route determining method may include the following steps.

In step 201, target parking space information of a target parking space is determined based on location information of obstacles in surroundings of a vehicle.

Optionally, the vehicle controls an image acquisition module through a vehicle terminal to acquire images to thereby obtain environmental information of the surroundings of the vehicle and generate a corresponding analog map, from which the location information of the obstacles in the surroundings may be determined, and the target parking space information of the target parking space is determined based on the location information of the obstacles. The location information of the obstacles may be image coordinates of the obstacles in the analog map generated by the vehicle terminal, and the target parking space information of the target parking space is image coordinates of the target parking space in the analog map generated by the vehicle terminal. That is, in the present disclosure, the target parking space information may be expressed in the form of coordinates, i.e., (x, y, w, h), where x represents the horizontal coordinate of a first vertex of the target parking space, y represents the vertical coordinate of the first vertex of the target parking space, w represents the length of the target parking space, and h represents the width of the target parking space.

Optionally, the target parking space may be determined by the vehicle terminal based on the location information of the obstacles in the analog map, and there may be one or more target parking spaces. For example, the vehicle terminal determines the size of each space between the obstacles based on the location information of the obstacles, and determines a corresponding target parking space based on the size of the space.

In step 202, a target area is determined based on the target parking space information. The target area is an area on a travel route of the vehicle where a parking operation is performed for parking the vehicle into the target parking space.

Optionally, the vehicle terminal may determine the target area corresponding to the target parking space information on the travel route of the vehicle. The target area is an area on the travel route of the vehicle where a parking operation is performed for parking the vehicle into the target parking space. For example, after arriving at the target area, the vehicle may start to park into the target parking space from a location of the target area. That is, the vehicle may travel to the target area and then be operated to be parked into the target parking space. The target area is not smaller than an area occupied by the vehicle model on the analog map.

In step 203, the target area is sampled, and a target matrix corresponding to the target area is generated based on a plurality of sampling points obtained through the sampling. Each element in the target matrix corresponds to a respective one of the sampling points, and each element is a vector.

Optionally, the vehicle terminal samples the target area, and generates the target matrix based on the sampling points obtained through the sampling. Each element in the target matrix may consist of coordinate information of a respective one of the sampling points. The sampling frequency and period of the vehicle terminal may be preset by developers.

In a possible implementation, before sampling by the vehicle terminal, feature points of the vehicle model can be extracted to obtain each feature point of the vehicle model and location information of each of the feature points, and acquire, from the target area, points corresponding respectively to the location information of the feature points as the sampling points. The feature points of the vehicle model may reflect shape features and curvature features that make up the vehicle model, such as inflection points and points along a side length of the vehicle model.

In step 204, a parking route for the vehicle is determined based on current pose information of the vehicle, the target matrix and the target parking space information.

Optionally, the vehicle terminal may determine a parking route for the vehicle based on the current pose information of the vehicle, the target matrix obtained through the sampling, and the target parking space information, so that the vehicle can be parked into the target parking space following the parking route. The current pose information of the vehicle is current location information of the vehicle model on the generated analog map, and the current pose information may also be expressed in the form of coordinates. For example, the vehicle model is rectangular, and the vehicle terminal may represent the vehicle model in a form similar to the target parking space information.

In summary, the parking route determining method includes: determining target parking space information of a target parking space based on location information of obstacles in surroundings of a vehicle; determining a target area based on the target parking space information, the target area being an area on a travel route of the vehicle where a parking operation is performed for parking the vehicle into the target parking space; sampling the target area, and generating a target matrix corresponding to the target area based on a plurality of sampling points obtained through the sampling, each element in the target matrix corresponding to a respective one of the sampling points, and each element being a vector; and determining a parking route for the vehicle based on current pose information of the vehicle, the target matrix, and the target parking space information. According to the present disclosure, a target area is determined based on target parking space information; the target area is sampled to generate a target matrix; and then a parking route is determined for the vehicle based on current pose information of the vehicle, the target matrix, and the target parking space information, by way of which a user does not need to evaluate the parking route based on parking experience, which improves the accuracy in determining a parking route.

In a possible implementation, during the sampling, the vehicle terminal samples the target area based on a predetermined sampling structure, and determines vector directions of the sampling points based on the sampling points obtained through the sampling and the target parking space information, so as to generate the target matrix. This clearly defines analog data at the time of the vehicle being parked into the parking space corresponding to the target parking space information in this solution, and improves the efficiency in determining the parking route.

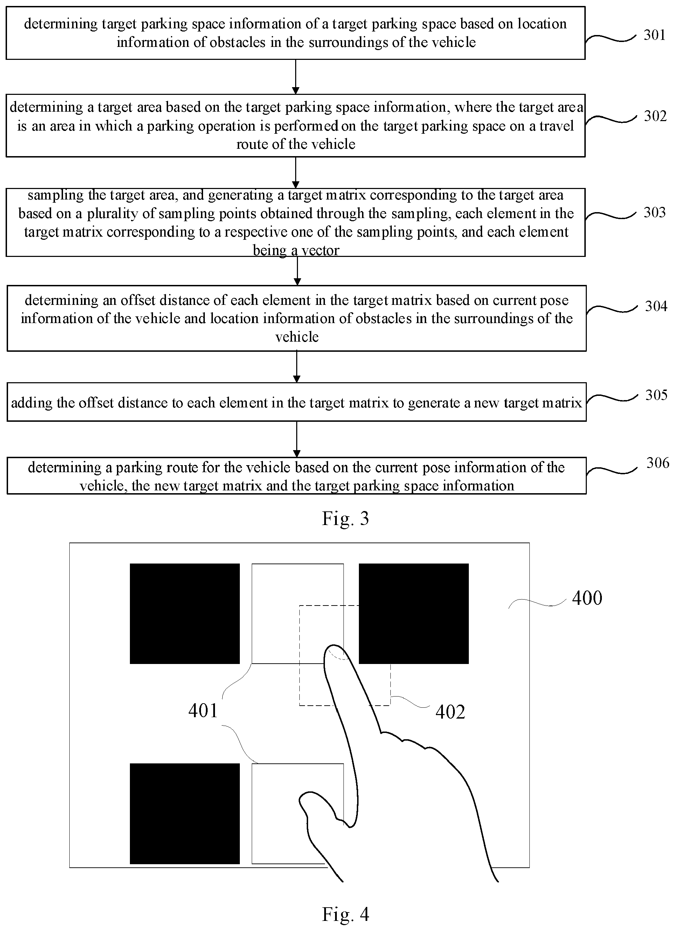

Referring to Fig. 3, a flowchart of a parking route determining method provided by an exemplary embodiment of the present disclosure is shown. The parking route determining method may be applied to the vehicle terminal in the vehicle in the scenario architecture shown in Fig. 1, and the method may be executed by the vehicle terminal. As shown in Fig. 3, the parking route determining method may include the following steps.

In step 301, target parking space information of a target parking space is determined based on location information of obstacles in surroundings of a vehicle.

Optionally, when the vehicle controls an image acquisition module through a vehicle terminal to acquire images, a camera mounted outside the vehicle may be used to acquire images of the obstacles in the surroundings of the vehicle. By identifying the images of the obstacles, location coordinates of the obstacles relative to the vehicle in space may be determined, and the location coordinates of the obstacles relative to the vehicle in real space are converted into a virtual analog map to obtain an analog map containing the location information of the obstacles. Alternatively, the vehicle may acquire line segment images of the obstacles through an ultrasonic device (such as an ultrasonic radar) mounted on the vehicle to acquire the location information of the obstacles in the surroundings of the vehicle through ultrasonic radar data. The device mounted on the vehicle for acquiring data about the surroundings is not limited in the present disclosure.

When the vehicle is traveling, the vehicle terminal may determine each target parking space based on the location information of the obstacles on the analog map, coordinate information of each target parking space on the analog map being target parking space information of the parking space. For example, in Fig. 1, after determining the location information of the obstacles on the analog map, the vehicle terminal determines, based on the size and shape of the vehicle model, whether a space betweenj two obstacles is usable for parking. If the space is usable for parking, the space between the two obstacles may be used as a target parking space, and coordinate information corresponding to the space between the two obstacles is also parking space information of the target parking space.

In a possible implementation, after the vehicle uses a camera mounted outside the vehicle to capture images, the captured images contain parking space frames. The vehicle terminal may also identify these unoccupied parking space frames through an image recognition module to determine location information of these parking space frames on the analog map, thereby taking the unoccupied parking space frames as target parking spaces, and taking the location information of the parking space frames on the analog map as parking space information of the parking space frames.

In a possible implementation, the vehicle terminal may also determine a plurality of target parking spaces, and select, by way of user interaction, one of the target parking spaces for use in determining a parking route. For example, the vehicle terminal may also include a touch screen by which the vehicle terminal may interact with a user to select a target parking space. Referring to Fig. 4, a schematic diagram of a display interface of a vehicle terminal according to an exemplary embodiment of the present disclosure is shown. As shown in Fig. 4, a display interface 400 includes target parking spaces 401 and a selection box 402. The vehicle terminal displays the selection box 402 after receiving a user's trigger operation on the touch screen, determines a target parking space, and takes coordinate information corresponding to the target parking space selected by the user as target parking space information.

In step 302, a target area is determined based on the target parking space information. The target area is an area on a travel route of the vehicle where a parking operation is performed for parking the vehicle into the target parking space.

Optionally, the vehicle terminal determines the target area corresponding to the target parking space information based on the target parking space information, the target area being an area on the travel route of the vehicle where a parking operation may be performed for parking the vehicle into the target parking space. For example, the vehicle terminal may determine a travel route for the vehicle during traveling and determine, based on the travel route of the vehicle and the target parking space information, an area where a parking operation may be performed for parking the vehicle into the target parking space.

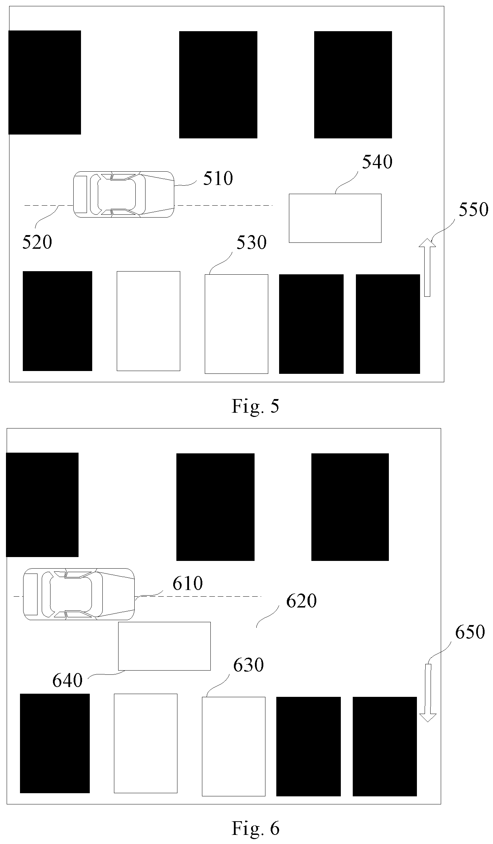

Referring to Fig. 5, a schematic diagram of a target area determined on an analog map according to an exemplary embodiment of the present disclosure is shown. As shown in Fig. 5, the analog map includes a vehicle model 510, a travel route 520, a target parking space 530, and a target area 540. The vehicle terminal determines the target area 540 corresponding to the target parking space 530 based on the travel route 520 of the vehicle during traveling. Optionally, if the scenario is a parking lot, the vehicle terminal may also determine a parking direction of the target parking space based on parking directions of other vehicles, and thus determine a location of the target area 540.

For example, in Fig. 5, vehicles on a right side of the travel route of the vehicle are all parked toward a first direction 550, in which case the vehicle terminal determines that the parking direction of the target parking space 530 is also the first direction 550, and locates the target area at the target area 540 as shown in Fig. 5 to facilitate parking by the user. In a possible implementation, referring to Fig. 6, a schematic diagram of a target area determined on an analog map according to an exemplary embodiment of the present disclosure is shown. As shown in Fig. 6, the analog map includes a vehicle model 610, a travel route 620, a target parking space 630, and a target area 640. If vehicles on the right side of the travel route of the vehicle are all parked toward a second direction 650 which is opposite to the first direction 550 in Fig. 5, the vehicle terminal determines that the parking direction of the target parking space 630 is also the second direction 650, and locates the target area at the target area 640 as shown in Fig. 6.

Optionally, when determining the parking directions of other vehicles, the vehicle terminal may identify the front or back of other vehicles by image recognition. If the front of the vehicles is identified, it means that the front of other vehicles faces the travel route; and if the back of the vehicles is identified, it means that back of other vehicles faces the travel route, by way of which a corresponding parking direction is determined.

In step 303, the target area is sampled, and a target matrix corresponding to the target area is generated based on a plurality of sampling points obtained through the sampling. Each element in the target matrix corresponds to a respective one of the sampling points, and each element is a vector.

In a possible implementation, after determining the target area, the vehicle terminal may: sample the target area based on a predetermined sampling structure to obtain a plurality of sampling points; determine vector directions of the sampling points based on the plurality of sampling points and the target parking space information; and generate the target matrix corresponding to the target area based on the sampling points and the vector directions of the sampling points. A vector of each sampling point may indicate a direction of a corresponding point on the vehicle into a target parking space during parking of the vehicle into the target parking space, which reduces failure to find a direction into the target parking space after repeated adjustment of the front of the vehicle, and improves the efficiency in parking the vehicle.

Optionally, the vehicle terminal samples the target area through a sampling point generator to extract the sampling points. The sampling point generator may be configured based on a predetermined sampling structure. The predetermined sampling structure may be sampling in the target area at a fixed interval. For example, on the analog map, one sampling point is acquired every three length units on both horizontal and vertical coordinates. Vector directions of the sampling points are generated based on vector relationships between the sampling points and the target parking space information, and the target matrix corresponding to the target area is generated based on the sampling points and the vector directions of the sampling points.

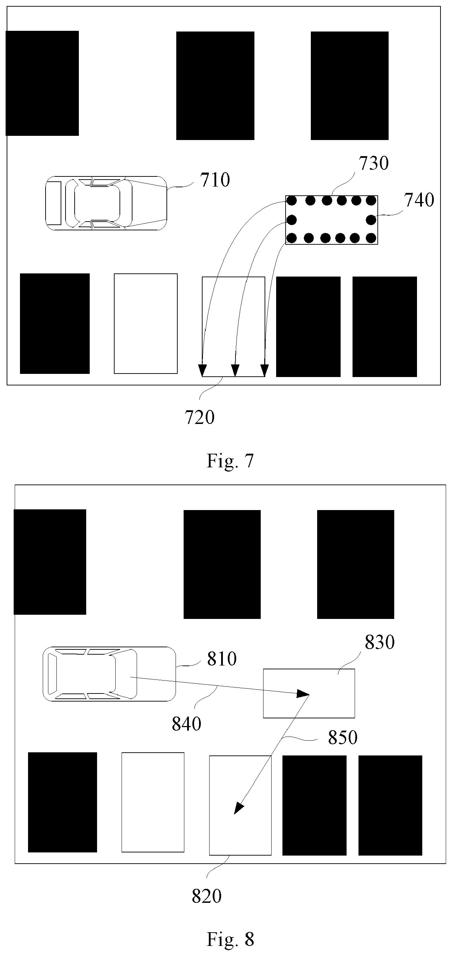

Referring to Fig. 7, a schematic structural diagram of each sampling point in a target area according to an exemplary embodiment of the present disclosure is shown. As shown in Fig. 7, a vehicle model 710, a target parking space 720, a target area 730, and sampling points 740 are included. The vector directions between the sampling points 740 and the target parking space 720 are shown by arrows in Fig. 7. The vehicle terminal generates the target matrix corresponding to the target area based on the sampling points and the vector directions of the sampling points.

In a possible implementation, the predetermined sampling structure may also be a structure based on feature points of the vehicle model. For example, the vehicle model includes ten feature points. The vehicle terminal determines, in the target area, a sub-area with a same size as the vehicle model, samples the sub-area based on the ten feature points of the vehicle model to acquire ten sampling points, generates vector directions of respective ones of the ten sampling points based on the vector relationships between the ten sampling points and the target parking space information of the target parking space, and generates the target matrix corresponding to the target area based on the ten sampling points and the vector directions of respective ones of the sampling points. The feature points may be determined based on a shape of the vehicle model. For example, the feature points may include an inflection point, an edge point, a center point, and so on, of the vehicle model.

In a possible implementation, the vehicle terminal may also: screen a plurality of sampling points based on planning parameters to acquire target sampling points, the planning parameters including a ratio of the number of the target sampling points to the total number of the plurality of sampling points, and sampling quality of the plurality of sampling points; and generate the target matrix corresponding to the target area based on the acquired target sampling points and vector directions of the target sampling points.

Optionally, the planning parameters may be requirements of the sampling point generator for the target matrix when generating the target matrix. The planning parameters may be preset by developers. The planning parameters include the ratio of the number of the target sampling points to the total number of the plurality of sampling points. This indicates that no matter how many sampling points are extracted in the extraction of sampling points, only sampling points at a corresponding ratio may be selected as elements of the target matrix when the target matrix is generated, so that the adaptability of generating the target matrix can be controlled. For example, if the ratio of the number of the target sampling points to the total number of the plurality of sampling points preset by the developers is 20%., then after the sampling points are extracted, sampling points whose sampling quality is the top 20% are selected as elements that make up the target matrix based on the sampling quality of the sampling points.

Optionally, the sampling quality may be calculated based on vector directions of the sampling points. For example, the vector directions of the sampling points are shown in Fig. 7. The vehicle terminal may calculate curvatures of the sampling points in their respective vector directions, determine the quality of the sampling points based on the curvatures corresponding to the vector directions, and select the sampling points whose sampling quality is the top 20% as elements of the target matrix.

In step 304, an offset distance for each element in the target matrix is determined based on current pose information of the vehicle and the location information of the obstacles in the surroundings of the vehicle.

Optionally, after determining the target matrix, the vehicle terminal may adjust the target matrix based on the current pose information of the vehicle and the location information of the obstacles in the surroundings of the vehicle. In this step, the offset distance for each element in the target matrix is determined based on the current pose information of the vehicle and the location information of the obstacles in the surroundings of the vehicle. If the offset distance for each element is determined to be 0, it indicates that the vehicle may be parked directly in accordance with the target matrix acquired from the target area, without bumping into other obstacles. If the offset distance for each element is determined to be greater than 0, it indicates that the vehicle may bump into other obstacles when being parked directly in accordance with the target matrix acquired from the target area. In this case, each element in the target matrix needs to be offset.

For example, after obtaining the target matrix, if the vehicle terminal detects that one or more sampling points of the vehicle may bump into an obstacle when the vehicle model is parked in accordance with the target matrix, a default distance away from the obstacle may be set for the vehicle and be taken as an offset distance for each element in the target matrix. The default distance may be preset by developers. Optionally, the offset distance may include an offset direction which is a direction away from the obstacle. Alternatively, this step may also be performed during parking of the vehicle into the target parking space after the vehicle travels to the target area. That is, during parking of the vehicle, the distances between a current location of the vehicle and the obstacles are acquired in real time based on the current pose information of the vehicle and the location information of the obstacles in the surroundings of the vehicle, and the offset distance for each element in the target matrix to be offset is set.

In step 305, the offset distance is added to each element in the target matrix to generate a new target matrix.

Optionally, the vehicle terminal adds, along the offset direction, the offset distance to each element in the target matrix to form the new target matrix. Because each element in the target matrix is location coordinates corresponding to each sampling point on the analog map, when the elements in the target matrix are offset, the elements in the target matrix are offset horizontally or vertically in the form of location coordinates to achieve the effect of adding the offset distance. For example, if the offset distance is five unit scales to the left, then the vehicle terminal needs to add five unit scales to the left to each element in the target matrix to obtain a new target matrix.

In step 306, a parking route for the vehicle is determined based on the current pose information of the vehicle, the new target matrix, and the target parking space information.

Optionally, the vehicle terminal may: connect the current pose information of the vehicle with the target matrix to determine a first parking route; connect the target matrix with the target parking space information to determine a second parking route; and generate the parking route for the vehicle based on the first parking route and the second parking route.

Referring to Fig. 8, a schematic structural diagram of a parking route according to an exemplary embodiment of the present disclosure is shown. As shown in Fig. 8, a vehicle model 810, a target parking space 820, a target area 830, a first parking route 840, and a second parking route 850 are included. The vehicle terminal makes planning and connection based on the obtained new target matrix and the current pose information of the vehicle to determine the first parking route 840. The first parking route 840 may instruct the vehicle to travel from a current location to the target area corresponding to the target matrix. Optionally, in the present disclosure, a center of the vehicle model 810 may be connected to a center of the target area 830 by a straight line which is then used as the first parking route 840.

The vehicle terminal also makes the planning and connection based on the obtained new target matrix and the target parking space information to determine the second parking route 850. The second parking route 850 may instruct the vehicle to travel from the target area to the target parking space 820. Optionally, in the present disclosure, the center of the target area 830 may also be connected to a center of the target parking space 820 by a straight line which is then used as the second parking route 850. Alternatively, the vehicle terminal may also plan out a curve based on the center of the target area 830 and the center of the target parking space 820 for parking following the curve, which is not limited in the present disclosure.

Optionally, after determining the first parking route and the second parking route, the vehicle terminal may take the first parking route and the second parking route together as the parking route for the vehicle, i.e., forming a complete parking route that enabling the vehicle to pass through the target area from the current location of the vehicle and be finally parked into the target parking space.

In a possible implementation, the vehicle terminal may also acquire a change range in the surroundings of the vehicle based on the location information of the obstacles in the surroundings of the vehicle, and re-execute, when the change range is larger than a first change threshold, the step of determining target parking space information of a target parking space based on location information of obstacles in the surroundings of the vehicle.

In the present disclosure, as the vehicle travels, images acquired by the vehicle through the image acquisition module are updated. In this case, if the vehicle is not parked, but continues to travel, changes in the surroundings will be great, and the vehicle terminal may acquire a change range in the surroundings. When the change range in the surroundings of the vehicle is larger than the first change threshold, it indicates that the surroundings of the vehicle are changing quickly, the vehicle is traveling at a high speed and may not to be parked for the moment, and that the previously determined target parking space is not to be adopted. In this case, the vehicle terminal repeats step 301 to determine a new target parking space, updates the target parking space, and determines a new parking route. In other words, the vehicle terminal prompts the vehicle to park following the determined parking route. If the vehicle passes by the previously determined target parking space directly, the vehicle may re-plan and repeat the above steps based on location information of obstacles in the surroundings of the vehicle to determine a new parking route.

In a possible implementation, the vehicle terminal may also: calculate a first cost score corresponding to the parking route and a second cost score corresponding to a historical route respectively by means of a cost function, the historical route including a parking route determined last time for parking the vehicle into a target parking space; and determine the parking route as a target planned route if the first cost score is lower than the second cost score, or determine the historical route as a target planned route if the first cost score is not lower than the second cost score.

In the present disclosure, the vehicle terminal may also compare the determined parking route with a historically planned parking route to select a better parking route between the two. For example, in the above process, after determining the parking route, the vehicle terminal calculates, by means of the cost function, the first cost score for the parking route determined this time, obtains, by means of the cost function, the second cost score corresponding to the parking route determined last time for parking the vehicle into the target parking space, and compares the two scores. If the first cost score is lower than the second cost score, it indicates that the parking route determined this time is better, and the parking route determined this time is taken as the target planned route. If the first cost score is not lower than the second cost score, it indicates that the parking route determined last time for parking the vehicle into a target parking space is better, and the parking route determined last time for parking the vehicle into a target parking space is taken as the target planned route. In a subsequent process of determining a parking route, planning is carried out by a planning method for the target planned route to plan out a further optimized parking route.

Optionally, the cost function may be expressed by Formula I as follows:

$$Y = a * L + b * N + c * R + d * F,$$

where Y represents the route cost, L represents the route length, N represents the number of direction changes during parking, R represents the distance from the vehicle to the nearest obstacle during parking, F represents the curvature variation of the route, and a, b, c and d are weighting parameters corresponding to L, N, R and F respectively. The weighting parameters are constants and may be preset by developers. The lower the route cost calculated by Formula I is, the higher the quality of the parking route is.

In summary, the parking route determining method includes: determining target parking space information of a target parking space based on location information of obstacles in the surroundings of a vehicle; determining a target area based on the target parking space information, the target area being an area on a travel route of the vehicle where a parking operation is performed for parking the vehicle into the target parking space; sampling the target area, and generating a target matrix corresponding to the target area based on a plurality of sampling points obtained through the sampling, each element in the target matrix corresponding to a respective one of the sampling points, and each element being a vector; and determining a parking route for the vehicle based on current pose information of the vehicle, the target matrix, and the target parking space information. According to the present disclosure, a target area is determined based on target parking space information; the target area is sampled to generate a target matrix; and then a parking route is determined for the vehicle based on current pose information of the vehicle, the target matrix, and the target parking space information, by way of which a user does not need to evaluate the parking route based on parking experience, which improves the accuracy in determining a parking route.

The following describes apparatus embodiments of the present disclosure, which may be used to implement the method embodiments of the present disclosure. For details not disclosed in the apparatus embodiments of the present disclosure, refer to the method embodiments of the present disclosure.

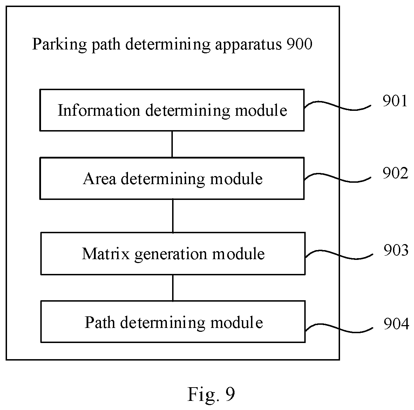

Referring to Fig. 9, a structural block diagram of a parking route determining apparatus according to an exemplary embodiment of the present disclosure is shown. The parking route determining apparatus 900 may be applied to a vehicle terminal on a vehicle and includes an information determining module 901, an area determining module 902, a matrix generation module 903, and a route determining module 904.

The information determining module 901 is configured to determine target parking space information of a target parking space based on location information of obstacles in surroundings of a vehicle.

The area determining module 902 is configured to determine a target area based on the target parking space information. The target area is an area on a travel route of the vehicle where a parking operation is performed for parking the vehicle into the target parking space.

The matrix generation module 903 is configured to sample the target area, and generate a target matrix corresponding to the target area based on a plurality of sampling points obtained through the sampling. Each element in the target matrix corresponds to a respective one of the sampling points, and each element is a vector.

The route determining module 904 is configured to determine a parking route for the vehicle based on current pose information of the vehicle, the target matrix, and the target parking space information.

In summary, parking route target parking space information of a target parking space is determined based on location information of obstacles in surroundings of a vehicle; a target area is determined based on the target parking space information, the target area being an area on a travel route of the vehicle where a parking operation is performed for parking the vehicle into the target parking space; the target area is sampled, and a target matrix corresponding to the target area is generated based on a plurality of sampling points obtained through the sampling, each element in the target matrix corresponding to a respective one of the sampling points, and each element being a vector; and a parking route for the vehicle is determined based on current pose information of the vehicle, the target matrix, and the target parking space information. According to the present disclosure, a target area is determined based on target parking space information; the target area is sampled to generate a target matrix; and then a parking route is determined for the vehicle based on current pose information of the vehicle, the target matrix, and the target parking space information, by way of which a user does not need to evaluate the parking route based on parking experience, which improves the accuracy in determining a parking route.

Optionally, the matrix generation module 903 includes a first sampling unit, a first determining unit, and a first generation unit.

The first sampling unit is configured to sample the target area based on a predetermined sampling structure to obtain a plurality of sampling points.

The first determining unit is configured to determine vector directions of the sampling points based on the plurality of sampling points and the target parking space information.

The first generation unit is configured to generate the target matrix corresponding to the target area based on the sampling points and the vector directions of the sampling points.

Optionally, the apparatus further includes a screening module. The screening module is configured to screen, after the first sampling unit samples the target area based on the predetermined sampling structure and obtains the plurality of sampling points, the plurality of sampling points based on planning parameters to obtain a plurality of target sampling points. The planning parameters include a ratio of the number of the target sampling points to the total number of the plurality of sampling points, and sampling quality of the plurality of sampling points.

The generation unit is also configured to generate the target matrix corresponding to the target area based on the acquired target sampling points and the vector directions of respective ones of the target sampling points.

Optionally, the apparatus further includes a distance determining module and a first generation module.

The distance determining module is configured to determine, after the matrix generation module 903 samples the target area and generates the target matrix corresponding to the target area based on the plurality of sampling points obtained through the sampling, an offset distance for each element in the target matrix based on the current pose information of the vehicle and the location information of the obstacles in the surroundings of the vehicle.

The first generation module is configured to add the offset distance to each element in the target matrix to generate a new target matrix.

The route determining module 904 is configured to determine a parking route for the vehicle based on the current pose information of the vehicle, the new target matrix, and the target parking space information.

Optionally, the apparatus further includes a range acquisition module and a first execution module.

The range acquisition module is configured to acquire a change range in the surroundings of the vehicle based on the location information of the obstacles in the surroundings of the vehicle.

The first execution module is configured to re-execute, when the change range is larger than a first change threshold, the step of determining target parking space information of a target parking space based on location information of obstacles in the surroundings of the vehicle.

Optionally, the apparatus further includes a score acquisition module and a first determining module.

The score acquisition module is configured to calculate, after the route determining module 904 determines the parking route for the vehicle based on the current pose information of the vehicle, the target matrix and the target parking space information, a first cost score corresponding to the parking route and a second cost score corresponding to a historical route respectively by means of a cost function. The historical route includes a parking route determined last time for parking the vehicle into a target parking space.

The first determining module is configured to determine the parking route as a target planned route if the first cost score is lower than the second cost score, or determine the historical route as a target planned route if the first cost score is not lower than the second cost score.

Optionally, the route determining module 904 includes a second determining unit, a third determining unit, and a second generation unit.

The second determining unit is configured to connect the current pose information of the vehicle with the target matrix to determine a first parking route.

The third determining unit is configured to connect the target matrix with the target parking space information to determine a second parking route.

The second generation unit is configured to generate the parking route for the vehicle based on the first parking route and the second parking route.

An embodiment of the present disclosure further discloses a vehicle including a vehicle terminal. The vehicle terminal includes a processor and a memory having a computer program stored therein. The computer program, when executed by the processor, causes the processor to implement the parking route determining method according to any of the above method embodiments. Optionally, the vehicle may be a vehicle with flight capabilities.

An embodiment of the present disclosure further discloses a computer-readable storage medium having a computer program stored therein. The computer program, when executed by a processor, implements the method according to any of the above method embodiments.

It should be understood that reference throughout this specification to "one embodiment" or "an embodiment" means that a particular feature, structure, or characteristic described in connection with the embodiment is included in at least one embodiment of the present disclosure. Thus, the phrases "in one embodiment" or "in an embodiment" appeared in various places throughout this specification are not necessarily all referring to a same embodiment. Furthermore, the particular features, structures, or characteristics may be combined in any suitable manner in one or more embodiments. A person skilled in the art should also appreciate that all the embodiments described in the specification are optional embodiments, and that those actions and modules involved therein are not necessarily required by the present disclosure.

In various embodiments of the present disclosure, it should be understood that sequence numbers of the foregoing steps do not mean any execution order. The execution order for the steps should be determined according to functions and internal logic of the steps, and should not be construed as any limitation to the implementation processes of the embodiments of the present disclosure.

Units described above as separate components may be or may not be separated physically. Components shown as units may be or may not be physical units, i.e., the units may be located at a physical place or may be distributed onto multiple network units. Some or all of the units may be selected depending on actual needs to achieve the objectives of the embodiments.

In addition, functional units in the embodiments of the present disclosure may be integrated into one processing unit, or each of the units may exist alone physically, or two or more units may be integrated into one unit. The integrated unit may be implemented in the form of hardware or in the form of a software functional unit.

When the above integrated unit is implemented in the form of a software functional unit and is sold or used as an independent product, the integrated unit may be stored in a computer-accessible memory. Based on this understanding, the technical solutions of the present disclosure in its essence, or the part thereof that contributes to the existing technologies, or some or all of the technical solutions can be embodied in the form of a software product. The computer software product is stored in a memory, including a plurality of instructions used to cause a computer device (which may be a personal computer, a server, or a network device, or in particular a processor in a computer device) to execute all or some of the steps of the methods described in the embodiments of the present disclosure.

It should be understood by those skilled in the art that all or some of the steps in the methods of the embodiments may be completed by means of a program instructing relevant hardware. The program may be stored in a computer-readable storage medium including a read-only memory (ROM), a random access memory (RAM), a programmable read-only memory (PROM), an erasable programmable read only memory (EPROM), a one-time programmable read-only memory (OTPROM), an electrically-erasable programmable read-only memory (EEPROM), a compact disc read-only memory (CD-ROM) or other optical disc memory, a magnetic disc memory, a magnetic tape memory, or any other computer-readable medium that can be used to carry or store data.

The above describes, by way of examples, a parking route determining method, a parking route determining apparatus, a vehicle, and a storage medium disclosed in the embodiments of the present disclosure. Specific examples are used herein to illustrate the principle and implementation of the present disclosure. The above embodiments are described merely to help understand the methods of the present disclosure and the core ideas thereof. Meanwhile, for those skilled in the art, it is possible to make changes to the implementation and application scope in accordance with the ideas of the present invention. In summary, the content of the specification should not be construed as limitations to the present invention.

**Claims**

1. A parking route determining method, applied to a vehicle terminal mounted in a vehicle, comprising:

   determining target parking space information of a target parking space based on location information of obstacles in the surroundings of the vehicle;
   determining a target area based on the target parking space information, wherein the target area is an area on a travel route of the vehicle where a parking operation is performed for parking the vehicle into the target parking space;
   sampling the target area, and generating a target matrix corresponding to the target area based on a plurality of sampling points obtained through the sampling, wherein each element in the target matrix corresponds to a respective one of the sampling points, and each element is a vector; and
   determining a parking route for the vehicle based on current pose information of the vehicle, the target matrix, and the target parking space information.

2. The method according to claim 1, wherein the step of sampling the target area, and generating a target matrix corresponding to the target area based on a plurality of sampling points obtained through the sampling comprises:

   sampling the target area based on a predetermined sampling structure to obtain a plurality of sampling points;
   determining vector directions of respective ones of the sampling points based on the plurality of sampling points and the target parking space information; and

   generating the target matrix corresponding to the target area based on the sampling points and the vector directions of respective ones of the sampling points.

3. The method according to claim 2, wherein after the step of sampling the target area based on a predetermined sampling structure to obtain a plurality of sampling points, the method further comprises:

   screening the plurality of sampling points based on planning parameters to obtain a plurality of target sampling points, wherein the planning parameters comprise a ratio of a number of the target sampling points to a total number of the plurality of sampling points and sampling quality of the plurality of sampling points; and
   wherein the step of generating the target matrix corresponding to the target area based on the sampling points and the vector directions of respective ones of the sampling points comprises: generating the target matrix corresponding to the target area based on the target sampling points and vector directions of respective ones of the target sampling points.

4. The method according to claim 1, wherein after the step of sampling the target area, and generating a target matrix corresponding to the target area based on a plurality of sampling points obtained through the sampling, the method further comprises:

   determining an offset distance for each element in the target matrix based on the current pose information of the vehicle and the location information of the obstacles in the surroundings of the vehicle; and
   adding the offset distance to each element in the target matrix to generate a new target matrix; and
   wherein the step of determining a parking route for the vehicle based on current pose information of the vehicle, the target matrix, and the target parking space information comprises:
   determining the parking route for the vehicle based on the current pose information of the vehicle, the new target matrix, and the target parking space information.

5. The method according to claim 1, further comprising:

   acquiring a change range in the surroundings of the vehicle based on the location information of the obstacles in the surroundings of the vehicle; and
   re-executing, when the change range is larger than a first change threshold, the step of determining target parking space information of a target parking space based on location information of obstacles in the surroundings of the vehicle.

6. The method according to claim 1, wherein after the step of determining a parking route for the vehicle based on current pose information of the vehicle, the target matrix, and the target parking space information, the method further comprises:

calculating a first cost score corresponding to the parking route and a second cost score corresponding to a historical route respectively by means of a cost function, wherein the historical route comprises a parking route determined last time for parking the vehicle into the target parking space; and

determining the parking route as a target planned route if the first cost score is lower than the second cost score, or determining the historical route as a target planned route if the first cost score is not lower than the second cost score.

7. The method according to any of claims 1 to 6, wherein the step of determining a parking route for the vehicle based on current pose information of the vehicle, the target matrix, and the target parking space information comprises:

connecting the current pose information of the vehicle with the target matrix to determine a first parking route;

connecting the target matrix with the target parking space information to determine a second parking route; and

generating the parking route for the vehicle based on the first parking route and the second parking route.

8. A parking route determining apparatus, applied to a vehicle terminal mounted in a vehicle, comprising:

an information determining module, configured to determine target parking space information of a target parking space based on location information of obstacles in the surroundings of the vehicle;

an area determining module, configured to determine a target area based on the target parking space information, wherein the target area is an area on a travel route of the vehicle where a parking operation is performed for parking the vehicle into the target parking space;

a matrix generation module, configured to sample the target area, and generate a target matrix corresponding to the target area based on a plurality of sampling points obtained through the sampling, wherein each element in the target matrix corresponds to a respective one of the sampling points, and each element is a vector; and

a route determining module, configured to determine a parking route for the vehicle based on current pose information of the vehicle, the target matrix, and the target parking space information.

9. The apparatus of claim 8, wherein the matrix generation module is further configured to:

sample the target area based on a predetermined sampling structure to obtain a plurality of sampling points;

determine vector directions of respective ones of the sampling points based on the plurality of sampling points and the target parking space information; and

generate the target matrix corresponding to the target area based on the sampling points and the vector directions of respective ones of the sampling points.

10. The apparatus of claim 9, further comprising:

means for screening the plurality of sampling points based on planning parameters to obtain a plurality of target sampling points, wherein the planning parameters comprise a ratio of a number of the target sampling points to a total number of the plurality of sampling points and sampling quality of the plurality of sampling points,

wherein the matrix generation module is further configured to generate the target matrix corresponding to the target area based on the target sampling points and vector directions of respective ones of the target sampling points.

11. The apparatus of claim 8, further comprising:

means for determining an offset distance for each element in the target matrix based on the current pose information of the vehicle and the location information of the obstacles in the surroundings of the vehicle; and

means for adding the offset distance to each element in the target matrix to generate a new target matrix,

wherein the route determining module is further configured to determine the parking route for the vehicle based on the current pose information of the vehicle, the new target matrix, and the target parking space information.

12. The apparatus of claim 8, further comprising:

means for acquiring a change range in the surroundings of the vehicle based on the location information of the obstacles in the surroundings of the vehicle; and

means for re-executing, when the change range is larger than a first change threshold, the step of determining target parking space information of a target parking space based on location information of obstacles in the surroundings of the vehicle.

13. The apparatus of claim 8, further comprising:

means for calculating a first cost score corresponding to the parking route and a second cost score corresponding to a historical route respectively by means of a cost function, wherein the historical route comprises a parking route determined last time for parking the vehicle into the target parking space; and

means for determining the parking route as a target planned route if the first cost score is lower than the second cost score, or determining the historical route as a target planned route if the first cost score is not lower than the second cost score.

14. A vehicle, comprising a vehicle terminal, wherein the vehicle terminal comprises a processor and memory having a computer program stored therein, wherein the computer program, when executed by the processor, causes the processor to implement the parking route determining method according to any of claims 1 to 7.

15. A computer-readable storage medium having a computer program stored thereon which, when executed by a processor, implements the parking route determining method according to any one of claims 1 to 7.

Fig. 1

| |
|---|
| determining target parking space information of a target parking space based on location information of obstacles in the surroundings of the vehicle |

201

| |
|---|
| determining a target area based on the target parking space information, the target area being an area on a travel route of the vehicle where a parking operation is performed for parking the vehicle onto the target parking space |

202

| |
|---|
| sampling the target area, and generating a target matrix corresponding to the target area based on a plurality of sampling points obtained through the sampling, each element in the target matrix corresponding to a respective one of the sampling points, and each element being a vector |

203

| |
|---|
| determining a parking path for the vehicle based on current pose information of the vehicle, the target matrix and the target parking space information |

204

Fig. 2

determining target parking space information of a target parking space based on location information of obstacles in the surroundings of the vehicle — 301

determining a target area based on the target parking space information, where the target area is an area in which a parking operation is performed on the target parking space on a travel route of the vehicle — 302

sampling the target area, and generating a target matrix corresponding to the target area based on a plurality of sampling points obtained through the sampling, each element in the target matrix corresponding to a respective one of the sampling points, and each element being a vector — 303

determining an offset distance of each element in the target matrix based on current pose information of the vehicle and location information of obstacles in the surroundings of the vehicle — 304

adding the offset distance to each element in the target matrix to generate a new target matrix — 305

determining a parking route for the vehicle based on the current pose information of the vehicle, the new target matrix and the target parking space information — 306

Fig. 3

400

401

402

Fig. 4

Fig. 5

Fig. 6

Fig. 7

Fig. 8

Parking path determining apparatus 900

Information determining module — 901

Area determining module — 902

Matrix generation module — 903

Path determining module — 904

Fig. 9

Europäisches
Patentamt

European
Patent Office

Office européen
des brevets

# EUROPEAN SEARCH REPORT

Application Number

EP 21 20 5229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/131322 A1 (MITSUBISHI ELECTRIC CORP [JP]) 19 July 2018 (2018-07-19) * paragraph [0023] - paragraph [0030]; figures 1-2 * ----- | 1-15 | INV. G08G1/01 G08G1/14 |
| A | EP 3 786 586 A1 (ZENUITY AB [SE]) 3 March 2021 (2021-03-03) * paragraph [0020] - paragraph [0050] * ----- | 1-15 | |

TECHNICAL FIELDS
SEARCHED      (IPC)

G08G

The present search report has been drawn up for all claims

| Place of search | Date of completion of the search | Examiner |
|---|---|---|
| The Hague | 21 March 2022 | Gutiérrez García, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5229

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2022

| Patent document cited in search report | | Publication date | Patent family member(s) | | Publication date |
|---|---|---|---|---|---|
| WO 2018131322 | A1 | 19-07-2018 | CN | 110139794 A | 16-08-2019 |
| | | | EP | 3568334 A1 | 20-11-2019 |
| | | | JP | 6749480 B2 | 02-09-2020 |
| | | | JP | 2019529209 A | 17-10-2019 |
| | | | US | 9969386 B1 | 15-05-2018 |
| | | | WO | 2018131322 A1 | 19-07-2018 |
| EP 3786586 | A1 | 03-03-2021 | CN | 112440990 A | 05-03-2021 |
| | | | EP | 3786586 A1 | 03-03-2021 |
| | | | US | 2021064031 A1 | 04-03-2021 |

EPO FORM P0459

For more details about this annex : see Official Journal of the European Patent Office, No. 12/82